(19) Europäisches Patentamt
European Patent Office
Office européen des brevets

(11) **EP 3 195 296 B1**

(12) **FASCICULE DE BREVET EUROPEEN**

(45) Date de publication et mention de la délivrance du brevet:
**20.11.2019 Bulletin 2019/47**

(21) Numéro de dépôt: **15771067.4**

(22) Date de dépôt: **18.09.2015**

(51) Int Cl.:
**G09C 1/00** *(2006.01)*       **H04L 9/32** *(2006.01)*

(86) Numéro de dépôt international:
**PCT/EP2015/071479**

(87) Numéro de publication internationale:
**WO 2016/042144 (24.03.2016 Gazette 2016/12)**

(54) **SYSTÈME ET PROCÉDÉ DE SÉCURISATION D'UN CIRCUIT ÉLECTRONIQUE**

SYSTEM UND VERFAHREN ZUR SICHERUNG EINES ELEKTRONISCHEN SCHALTKREISES

SYSTEM AND METHOD FOR SECURING AN ELECTRONIC CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.09.2014 FR 1458863**

(43) Date de publication de la demande:
**26.07.2017 Bulletin 2017/30**

(73) Titulaire: **Commissariat à l'Énergie Atomique et aux Énergies Alternatives 75015 Paris (FR)**

(72) Inventeurs:
- **LECOMTE, Maxime**
  **13100 Aix en Provence (FR)**
- **FOURNIER, Jacques**
  **13109 Simiane-Collongue (FR)**
- **MAURINE, Philippe**
  **30260 Quissac (FR)**

(74) Mandataire: **Brevalex
95, rue d'Amsterdam
75378 Paris Cedex 8 (FR)**

(56) Documents cités:
**WO-A2-2012/122309**

- **XUEHUI ZHANG ET AL: "RON: An on-chip ring oscillator network for hardware Trojan detection", DESIGN, AUTOMATION&TEST IN EUROPE CONFERENCE&EXHIBITION (DATE), 2011, IEEE, 14 mars 2011 (2011-03-14), pages 1-6, XP032318342, DOI: 10.1109/DATE.2011.5763260 ISBN: 978-1-61284-208-0**
- **CHARLES LAMECH ET AL: "An Experimental Analysis of Power and Delay Signal-to-Noise Requirements for Detecting Trojans and Methods for Achieving the Required Detection Sensitivities", IEEE TRANSACTIONS ON INFORMATION FORENSICS AND SECURITY, IEEE, PISCATAWAY, NJ, US, vol. 6, no. 3, 1 septembre 2011 (2011-09-01), pages 1170-1179, XP011476656, ISSN: 1556-6013, DOI: 10.1109/TIFS.2011.2136339**

**Description**

## DOMAINE TECHNIQUE

Le domaine de l'invention est celui de la sécurisation des circuits électroniques. L'invention porte plus particulièrement sur la vérification d'intégrité d'un circuit électronique pour la détection d'un éventuel cheval de Troie matériel, ainsi que sur l'authentification d'un tel circuit électronique.

## ÉTAT DE LA TECHNIQUE ANTÉRIEURE

Les circuits intégrés, notamment ceux employés dans un but sécuritaire (chiffrement de données, communications cryptées, paiements sécurisés, etc.), sont des cibles potentielles pour des attaquants qui peuvent chercher à en modifier l'intégrité avec, par exemple, pour objectif de provoquer un déni de service, de dégrader ses performances ou encore d'induire une baisse de rendement de fabrication.

Pour ces raisons, il est important de munir ces circuits de contre-mesures garantissant leur sécurité. Jusqu'à présent, la sécurité des circuits intégrés portait principalement sur du conditionnement sécurisé et des mesures contre les attaques physiques (par canaux auxiliaires et par injection de fautes) comme par exemple l'analyse différentielle de la consommation. Mais avec les phénomènes de délocalisation de la production dans des fabriques tierces et l'explosion de la contrefaçon, de nouveaux besoins liés à l'authentification et à la vérification d'intégrité des circuits électroniques ont émergé.

Aujourd'hui, l'authentification d'un circuit peut être réalisée à l'aide d'une clef secrète et unique stockée dans une mémoire du circuit. Cette clef est généralement écrite en mémoire lors de la phase de personnalisation du circuit. En parallèle, la clef est stockée dans une base de données d'un serveur. Pour réaliser une authentification du circuit électronique, le serveur envoie un mot binaire au circuit qui l'utilise pour traiter (avec un algorithme de hachage par exemple) la clef stockée en mémoire et renvoie le résultat au serveur. Le serveur applique la même procédure avec la clef stockée dans la base de données et compare le résultat obtenu avec celui renvoyé pas le circuit. Si les deux résultats sont identiques, le circuit est authentifié. Outre son coût (lié à la phase de personnalisation et au degré de sécurité de la mémoire stockant la clef), ce mode d'authentification présente également l'inconvénient de ne pas être parfaitement robuste puisqu'il s'avère clonable tant mathématiquement que physiquement.

Une autre solution d'authentification consiste à mesurer des caractéristiques intrinsèques et inclonables d'un circuit donné comme cela est fait en biométrie pour authentifier les personnes. Dans ce domaine, de nombreuses recherches ont été effectuées, en particulier dans le domaine des fonctions physiques inclonables dites PUFs (pour *Physical Unclonable Functions*). Les fonctions PUFs sont des structures matérielles qui mesurent des caractéristiques intrinsèques des circuits, c'est à dire des caractéristiques révélatrices des variations des procédés de fabrications reconnues impossibles à cloner (tant mathématiquement que physiquement) car suffisamment importantes et aléatoires pour garantir l'unicité des empreintes. On connaît notamment des fonctions PUFs optiques basées sur les propriétés optiques de matériaux dopés aléatoirement avec des particules opaques, des fonctions PUFs basées sur les variations de l'environnement extérieur (via par exemple la mesure de la résistance équivalente d'un circuit ou celle des propriétés électriques d'un environnement spécial), des fonctions PUFs basées sur des différences entre délais de propagations internes d'un circuit (utilisant soit des arbitres, soit des oscillateurs en anneau), ou encore des fonctions PUFs basées sur l'état initial imprédictible de cellules mémoires.

Grâce à leur susceptibilité aux agressions physiques, les fonctions PUFs peuvent, dans une certaine mesure, être utilisées pour vérifier l'intégrité d'un circuit intégré. Toutefois, dans une approche plus globale et plus efficace du problème d'intégrité, il doit être vérifié qu'un circuit donné n'a pas été falsifié, en désactivant certaines fonctionnalités ou en ajoutant ce que l'on appelle un cheval de Troie matériel.

Un cheval de Troie est composé de deux parties, un déclencheur et un actionneur. Le déclencheur est un mécanisme qui est en attente et scrute des conditions pour lesquelles l'effet "néfaste" doit être déclenché. L'événement déclencheur peut être généré à l'extérieur (signal externe ou conditions physiques spéciales) ou généré à l'intérieur (état interne du circuit, configuration spéciale des données, etc.). De plus le déclencheur peut être combinatoire lorsque la condition recherchée est le résultat d'une opération logique sur plusieurs signaux, ou séquentiel lorsque le signal est généré par une machine d'état. L'actionneur est l'effet non désiré du cheval de Troie. Il peut être explicite lorsque des signaux ou des blocs logiques sont directement ajoutés, supprimés ou désactivés, ou implicite lorsque l'effet ne pas être directement observé, par exemple, l'amincissement de certains fils ou des informations cachées dans les canaux auxiliaires du circuit.

La détection d'un cheval de Troie matériel est un problème complexe et multidimensionnel qui dépend du type de cheval de Troie (fonctionnel ou paramétrique), de sa taille, de sa distribution sur la surface du circuit et de sa structure.

On connaît des techniques de détection basées sur l'analyse de fautes ou sur la génération automatique de vecteurs de test ATPG (*Automatic Test Pattern Generation*). Mais ces techniques s'avèrent limitées en termes de couverture du circuit.

On connaît également des techniques exploitant des canaux auxiliaires ou des délais de propagation sur des chemins internes d'un circuit. Mais elles requièrent des équipements relativement onéreux et des temps de mesure longs qui sont peu compatibles avec la production en volume de circuits intégrés. Elles nécessitent de plus un circuit de référence (dit *golden* dans la terminologie anglo-saxonne), à savoir une implémentation qui est déclarée saine (sans cheval de Troie) et dont des analyses de canaux auxiliaires ou de délais de propagation sont effectuées et utilisées comme référence pour l'analyse des autres circuits. Or un tel circuit de référence n'est valable qu'une fois le circuit fabriqué et après qu'il ait subi une phase complète de rétro ingénierie, phase qui est extrêmement coûteuse en temps et en ressources.

Les solutions de vérification d'intégrité existantes pour la détection d'un cheval de Troie matériel sont ainsi encore au stade expérimental et peu adaptées au déploiement industriel (production en volume).

On connait ainsi de la demande de brevet US 2013/019324 A1 une technique de vérification d'intégrité exploitant un réseau d'oscillateurs en anneaux distribués à travers un circuit, et une analyse statistique des données de ce réseau pour vérifier si un circuit est sain ou non. Trois méthodes statistiques consécutives sont plus précisément effectuées à l'extérieur du circuit. Les inconvénients de cette technique sont la nécessité d'une population de circuits sains de même conception, et l'application des trois méthodes statistiques qui s'avère coûteuse en calcul et qui n'est pas embarquée mais réalisée à l'extérieur du circuit.

Le document XP032318342 « An on-chip ring oscillator network for hardware Trojan détection" décrit une méthode statistique de détection de cheval de Troie materiel.

## EXPOSÉ DE L'INVENTION

L'invention a pour objectif de proposer une solution de vérification d'intégrité d'un circuit électronique pour la détection de l'éventuelle présence d'un cheval de Troie matériel susceptible d'infecter le circuit qui puisse être facilement déployée lors de la production de volume du circuit.

Pour ce faire, l'invention propose un système de sécurisation d'un circuit électronique tel que défini par la revendication 1.

Chaque région peut être dédiée à l'exécution d'une fonctionnalité donnée, l'activation d'une région prenant alors la forme d'une commande de l'exécution de la fonctionnalité associée à la région.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma illustrant le système selon l'invention ;
- la figure 2 représente un exemple de déploiement spatial des capteurs sur la surface d'un circuit ;
- la figure 3 représente un exemple de capteur pouvant être utilisé dans le cadre de l'invention ;
- la figure 4 est un schéma illustrant le fonctionnement d'une vérification d'intégrité pouvant être mise en œuvre par un système selon l'invention.

## EXPOSÉ DÉTAILLÉ DE MODES DE RÉALISATION PARTICULIERS

L'invention est définie par les revendications indépendantes. Les modes de réalisation préférés sont indiqués dans les revendications dépendantes.

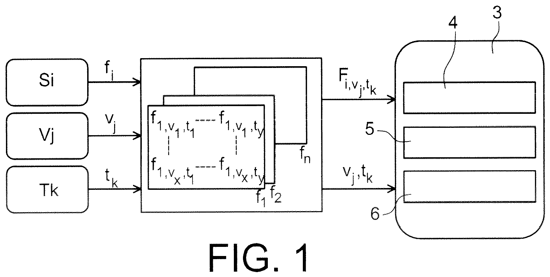

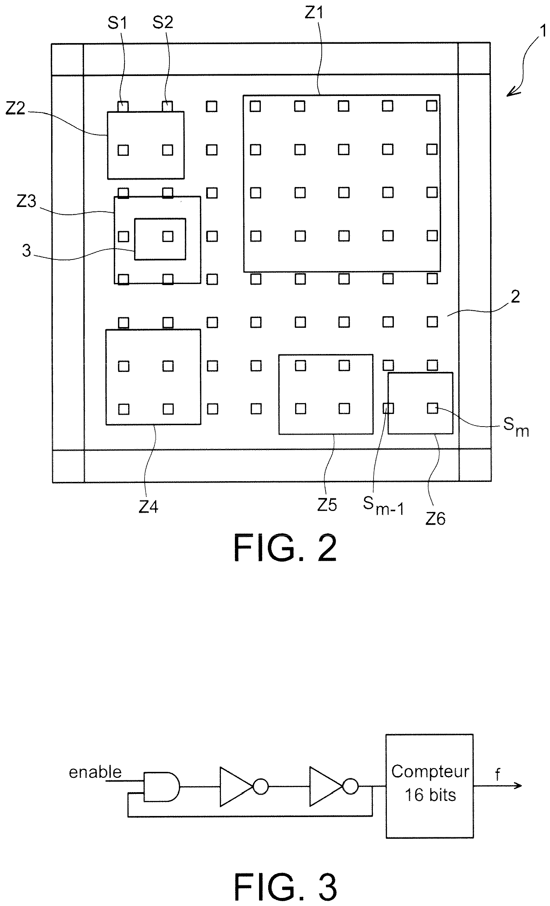

En référence aux figures 1 et 2, l'invention porte sur un système 1 de sécurisation d'un circuit électronique 2, le circuit 2 comprenant plusieurs régions Z1-Z6 dont la mise en activité peut être commandée. Par exemple, une région est dédiée à l'exécution d'une fonctionnalité, et sa mise en activité correspond à l'exécution de cette fonctionnalité.

Le système comporte une pluralité de capteurs Si, S1-Sm intégrés dans le circuit électronique, chaque capteur étant sensible aux variations de procédé de fabrication et aux conditions de fonctionnement (tension d'alimentation notamment) de sorte à être apte à fournir une mesure représentative d'une activité locale du circuit électronique dans une zone entourant le capteur et de la qualité locale du silicium. Les capteurs S1-Sm peuvent être répartis sous la forme d'une matrice régulière (comme représenté sur la figure 2 où l'on retrouve une matrice de 8*8 capteurs) ou non. En particulier, la densité surfacique des capteurs peut être variée localement (distribution non-uniforme) selon la partie du circuit qu'on l'on cherche à protéger.

Les capteurs sont de préférence répartis sur toute la surface du circuit, mais d'une manière générale, le placement et le nombre de capteurs sont choisis en fonction de la disposition des différentes régions du circuit afin d'obtenir des mesures représentant au mieux l'activité du circuit.

Le circuit 2 est formé de composants intégrés sur une puce. Les capteurs sont également intégrés sur la puce, mais ne participent pas à la réalisation de la ou des fonctionnalités du circuit.

Les mesures fournies par les capteurs sont récupérées par une unité d'acquisition et traitées par une unité de traitement 3. L'unité de traitement peut être implémentée de façon matérielle et/ou logicielle, être déportée ou non à l'extérieur du circuit. Dans un mode de réalisation représenté sur la figure 2, les unités d'acquisition et de traitement sont intégrées au circuit, en étant typiquement placées dans un espace laissé libre du circuit (la région Z3 sur la figure 2).

Les capteurs Si fournissent une valeur de sortie, numérique, qui dépend des variations de procédé de fabrication et de la tension d'alimentation locale. Ils sont commandables et peuvent être activés ou désactivés. Leur sortie est de préférence peu influencée par les conditions de température.

Les capteurs sont de préférence paramétrables, par exemple pour en modifier la sensibilité. Dans le cas de capteurs de type oscillateur en anneau, il est ainsi possible de jouer sur le temps de comptage.

Un exemple de tels capteurs est un dispositif de mesure de délai qui utilise un amplificateur de délai et une méthode d'interpolation de deux délais pour générer un mot numérique dont la valeur varie en fonction du délai mesuré et donc des variations de procédé de fabrication. On appelle arbitre l'élément comparant les délais de propagation sur deux chemins. Les chemins comparés peuvent être un chemin préexistant et une réplique ou deux chemins dédiés semblables.

Un autre exemple de capteurs est un oscillateur en anneau dont un exemple de réalisation est illustré sur la figure 3. Dans cet exemple, l'oscillateur est composé d'une porte ET, de deux inverseurs et d'un compteur 16 bits. La mise à l'état actif du signal 'enable' provoque une oscillation à une fréquence f qui dépend des variations de procédé, de la température et de la tension d'alimentation. A partir de cette fréquence d'oscillation, une valeur numérique est générée par le compteur qui énumère les oscillations pendant un temps donné. La mise à l'état non actif du signal 'enable' provoque la stabilité du système et l'arrêt des oscillations.

## Identification des bits informatifs

Les capteurs fournissent de préférence des mesures sous forme de mots numériques chacun constitué d'une série de bits. L'unité de traitement 3 peut comprendre un module d'identification des bits informatifs permettant d'identifier les bits caractéristiques de chaque capteur et dont la variation entre deux mesures reste limitée. Il s'avère de la sorte possible de réduire la taille des mots numériques, sans perdre de contenu informatif.

A cet effet, le module d'identification des bits informatifs est configuré pour éliminer des séries de bits fournies par chaque capteur les bits invariants dans les mots numériques fournis par les différents capteurs et les bits variants de manière aléatoire dans les différents mots numériques fournis par le capteur.

Dans un premier temps, le module d'identification des bits informatifs identifie les bits invariants d'un capteur à un autre, par exemple via le calcul de la variance ou de l'entropie de chaque bit entre les capteurs. Les bits pour lesquels la variance (ou l'entropie) est nulle peuvent alors être supprimés. Il s'agit par exemple des bits de poids forts jusqu'au premier bit ayant une variance (ou une entropie) non nulle entre les capteurs.

Dans un second temps, le module d'identification des bits informatifs identifie les bits qui varient aléatoirement entre deux acquisitions d'un même capteur, par exemple grâce au calcul de la variance (ou l'entropie) de chaque bit entre différentes acquisitions. Les bits pour lesquels la variance (ou l'entropie) est non nulle peuvent alors être supprimés. Il s'agit par exemple des bits de poids faibles jusqu'au premier bit de variance (entropie) nulle entre deux acquisitions.

Le module d'identification des bits informatifs permet ainsi de limiter la taille des mots numériques provenant de chaque capteur pour ne conserver que les bits contenant de l'information utile et unique à chaque capteur. Dans un exemple de réalisation, sur les 16 bits générés par un capteur, on identifie, pour l'ensemble des capteurs, les 6 bits de poids forts comme portant de l'information invariante entre capteurs et les 6 bits de poids faibles comme portant de l'information aléatoire du capteur. Cela laisse donc 4 bits informatifs communs par capteur.

Le module d'identification des bits informatifs est de préférence placé en amont des autres modules 4, 5, 6 de l'unité de traitement qui seront décrits par la suite.

## Vérification d'intégrité

L'unité de traitement 3 comprend un module de vérification d'intégrité 4 permettant de détecter l'éventuelle présence d'un cheval de Troie matériel dans le circuit 2. Le module de vérification d'intégrité 4 permet plus précisément de détecter et éventuellement de localiser l'activité électrique des déclencheurs ou celle des actionneurs. Il est pour cela configuré pour :

- déterminer, à partir des mesures fournies par les capteurs, et pour chacune des régions, une partition des capteurs entre capteurs affectés et capteurs non affectés par l'activation (mise en activité) de la région;
- comparer chacune des partitions à une partition modèle, obtenue à partir d'un circuit de référence (*golden*) ou bien de simulations lors de la conception du circuit, pour détecter l'éventuelle présence d'un cheval de Troie matériel susceptible d'infecter le circuit électronique.

Dans le cas où le circuit est affecté par un cheval de Troie matériel, le déclencheur du cheval de Troie vient modifier l'activité du circuit et de là les partitions des capteurs. Les partitions ne correspondant pas aux partitions modèles, l'infection du circuit peut être déclarée.

Le module de vérification d'intégrité 4 peut exploiter les mesures fournies par les capteurs pour différentes activités du circuit. Ainsi, dans un mode de réalisation possible, le module de vérification d'intégrité 4 peut être configuré pour :

- désactiver toutes les régions du circuit électronique (par exemple en désactivant toutes les fonctionnalités du circuit électronique) et réaliser une acquisition des mesures fournies par les capteurs ;

- mettre en activité (activer) à tour de rôle une seule des régions du circuit électronique (par exemple en commandant l'exécution à tour de rôle d'une seule des fonctionnalités du circuit électronique), et réaliser une acquisition des mesures fournies par les capteurs ;
- comparer, pour chacune des régions, et pour chacun des capteurs, la mesure réalisée par le capteur alors que seule la région est mise en activité à la mesure réalisée par le capteur alors que toutes les régions sont désactivées ;
- déterminer lesdites partitions des capteurs à partir desdites mesures comparées.

Une région peut être dédiée à l'exécution d'une fonctionnalité donnée et son activation (mise en activité) peut ainsi consister à exécuter cette fonctionnalité. En variante ou non, des générateurs d'activités électriques peuvent être intégrés au sein du circuit afin d'améliorer, le cas échéant (par exemple lorsque le circuit contient peu de blocs fonctionnels), le nombre de partitions qu'il est possible de construire. Un générateur d'activités produit un appel en courant local, conduisant à l'activation d'une région donnée du circuit.

Les différentes acquisitions sont réalisées pendant une même durée. Le résultat de la comparaison est, pour chaque région du circuit successivement activée, une liste de mesures comparées. Dans l'exemple présenté ci-dessus où les capteurs sont des oscillateurs en anneau, la liste est une liste de différences de fréquence d'oscillation. Cette liste est exploitée pour séparer la population des capteurs en deux ensembles : un premier ensemble contenant les capteurs affectés par l'activité de la région activée et un second ensemble contenant les capteurs non affectés par l'activité de la région activée. Cette séparation est typiquement mise en œuvre par un algorithme de partitionnement, par exemple l'algorithme des k-moyennes (standard ou flou), un algorithme d'apprentissage supervisé de type classifieur bayesien ou de type machine à vecteurs de support.

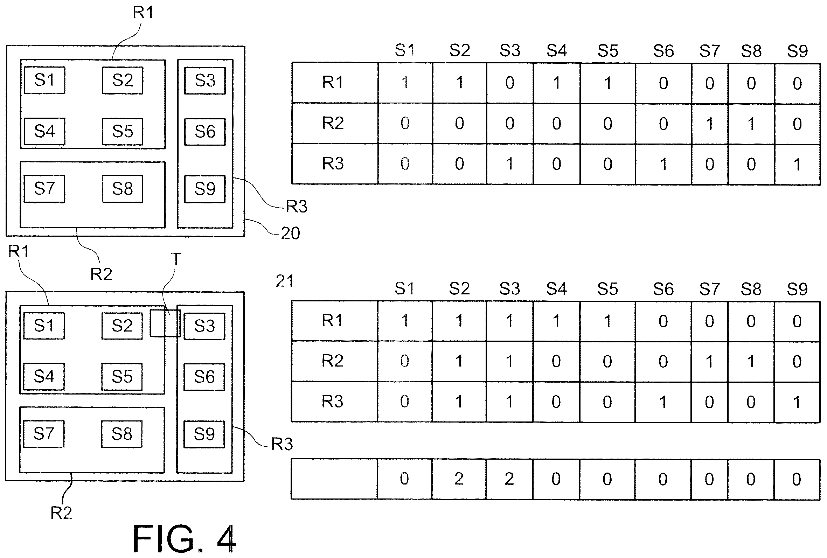

La figure 4 illustre cette vérification d'intégrité en prenant pour exemple un circuit sain 20 comprenant trois régions R1, R2 et R3 pour la mise en œuvre de trois fonctionnalités et un circuit 21 de même conception mais infecté par un cheval de Troie matériel T. Des capteurs S1-S9 sont réparties de manière matricielle sur les circuits 20, 21.

Le tableau en haut à droite illustre, pour le circuit sain 20, et pour chacune des régions, la partition des capteurs entre capteurs affectés (« 1 ») et capteurs non affectés (« 0 ») par l'activation de la région (exécution d'une fonctionnalité dans l'exemple qui suit). Plusieurs essais peuvent être réalisés pour obtenir une probabilité d'être affectés si nécessaire. Ainsi l'exécution de la fonctionnalité correspondant à la région R1 et les mesures des différents capteurs permet de déterminer que les capteurs S1, S2, S4 et S5 sont affectés par l'exécution de cette fonctionnalité, tandis que les autres ne le sont pas. De même l'exécution de la fonctionnalité correspondant à la région R2 et les mesures des différents capteurs permet de déterminer que les capteurs S7 et S8 sont affectés par l'exécution de cette fonctionnalité, tandis que les autres ne le sont pas. Enfin, l'exécution de la fonctionnalité correspondant à la région R3 et les mesures des différents capteurs permet de déterminer que les capteurs S3, S6 et S9 sont affectés par l'exécution de cette fonctionnalité, tandis que les autres ne le sont pas.

En d'autres termes, chaque ligne de ce tableau illustre la partition modèle pour chacune des fonctionnalités correspondant aux régions R1-R3. En pratique, la partition modèle est une partition issue de simulation, ou une partition réalisée à partir de mesures de capteurs intégrés dans un circuit sain de référence.

Le tableau en bas à droite illustre quant à lui pour le circuit infecté 21, pour chacune des fonctionnalités, la partition des capteurs entre capteurs affectés et capteurs non affectés par l'exécution de la fonctionnalité. Ainsi l'exécution de la fonctionnalité correspondant à la région R1 et les mesures des différents capteurs permet de déterminer que les capteurs S1-S5 sont affectés par l'exécution de cette fonctionnalité, tandis que les autres ne le sont pas. De même l'exécution de la fonctionnalité correspondant à la région R2 et les mesures des différents capteurs permet de déterminer que les capteurs S2, S3, S7 et S8 sont affectés par l'exécution de cette fonctionnalité, tandis que les autres ne le sont pas. Enfin, l'exécution de la fonctionnalité correspondant à la région R3 et les mesures des différents capteurs permet de déterminer que les capteurs S2, S3, S6 et S9 sont affectés par l'exécution de cette fonctionnalité, tandis que les autres ne le sont pas.

La comparaison ligne à ligne des deux tableaux permet de constater une partition différente des capteurs et donc de conclure à une infection du circuit 21 par un cheval de Troie matériel. Cette comparaison des partitions peut être réalisée au moyen d'une mesure de similarité, par exemple selon l'indice de rand ou l'indice de Jaccard.

Par ailleurs, dans un mode de réalisation possible, le module de vérification d'intégrité 4 est en outre configuré pour localiser un éventuel cheval de Troie matériel, par exemple en venant compter, pour chaque capteur et pour l'ensemble des fonctionnalités, le nombre de fois où il se retrouve classé dans un ensemble différent de celui où il devrait apparaître dans la partition modèle. Lorsque ce nombre excède un seuil, le module de vérification d'intégrité détermine la présence d'un cheval de Troie matériel à proximité du capteur. Revenant à l'exemple de la figure 4, ce nombre est de zéro pour les capteurs S1 et S4-S9, et de deux pour les capteurs S2 et S3. On en déduit la présence du cheval de Troie T à proximité des capteurs S2 et S3.

Dans un mode de réalisation possible, et revenant à la figure 1, le système peut en outre comprendre au moins un détecteur intégré dans le circuit électronique et apte à fournir une mesure représentative d'une condition de fonctionnement du circuit. L'au moins un détecteur peut comprendre, comme représenté, un ou plusieurs détecteurs de tension Vj fournissant chacun une valeur de tension $v_j$ (globale ou locale) et un ou plusieurs détecteurs de température Tk fournissant chacun une valeur de température $t_k$ (globale ou locale). Les détecteurs peuvent éventuellement être identiques aux capteurs ; ils peuvent notamment prendre également la forme de résonateurs en anneau comme par exemple décrit dans l'article de L.Vincent et al. intitulé « Embedding statistical tests for on-chip dynamic voltage and temperature monitoring », Design Automation Conférence (DAC), 2012, 49th ACM/EDAC/IEEE, pp 994-999.

Les informations relatives à une condition de fonctionnement du circuit fournies par les détecteurs, et les variations de ces informations d'un circuit à l'autre, peuvent être exploitées de manière constructive pour permettre l'authentification du circuit électronique par mise au défi-réponse et/ou par génération de clef comme cela est décrit par la suite.

Authentification

Dans un mode de réalisation, l'unité de traitement 3 comprend un module d'authentification du circuit électronique par mise au défi-réponse 5 configuré pour calculer, en réponse à une mise au défi, une réponse de type fonction physique inclonable au moyen de mesures fournies par les capteurs et fournir ladite réponse accompagnée de la mesure fournie par l'au moins un détecteur qui est représentative d'une condition de fonctionnement du circuit.

L'invention permet ainsi d'authentifier un circuit grâce à ses caractéristiques physiques intrinsèques. L'entité demandant l'authentification du circuit envoie une mise au défi et reçoit en retour une réponse unique par mise au défi, par circuit et par condition de fonctionnement (couple tension V et température T typiquement), condition mesurée par le circuit lui-même et incrustée dans la réponse.

Les avantages par rapport aux systèmes existants sont un coût de surface par bit de réponse moindre. L'authentification est également plus robuste aux changements de température et de tension grâce à la prise en compte dans la réponse des conditions de fonctionnements V, T. De plus, le système permet facilement de sélectionner le nombre de bits utilisés pour l'authentification. Enfin, l'ensemble des mesures sont réalisées sur puce ce qui permet d'accélérer les procédures, et de réduire les coûts de production en volume.

Dans un mode de réalisation, la mise au défi correspond à un choix de m' capteurs parmi les m. Le module d'authentification 5 est ainsi configuré pour calculer la réponse de type fonction physique inclonable à partir des mesures fournies par un sous-ensemble de ladite pluralité de capteurs.

Cette réponse peut notamment consister en la concaténation de valeurs élaborées à partir des mesures fournies par les capteurs de chacune des $\binom{m'}{2}$ paires de capteurs parmi le sous-ensemble de m' capteurs de ladite pluralité de m capteurs. En particulier, la valeur élaborée pour une paire de capteurs p, q parmi le sous-ensemble de ladite pluralité de capteurs peut consister en

$$\Delta F_{pq} = F_{p,v_j,t_k} + F_{q,v_j,t_k} - \frac{2}{m'}\sum_{i=1}^{m'} F_{i,v_j,t_k} ,$$

où m' correspond au nombre de capteurs du sous-ensemble et $F_{i,v_j,t_k}$ correspond à la mesure fournie par l'un des capteurs du sous-ensemble pour une condition de fonctionnement du circuit $v_j$, $t_k$ donnée. Cette condition de fonctionnement est prélevée par un détecteur de tension ou de température global ou par plusieurs détecteurs locaux. Dans ce dernier cas, les réponses de ces détecteurs sont concaténées pour être représentative de la condition globale de fonctionnement du circuit. Des modules de post-traitement (par exemple des codes correcteurs d'erreurs) de la réponse du système d'authentification peuvent être intégrés (ou déportés à l'extérieur) pour accroître la fiabilité du système.

Le système peut par ailleurs comprendre une base de données recensant, pour chacune d'une pluralité de conditions de fonctionnement du circuit, la réponse attendue pour une mise au défi donnée, et un comparateur configuré pour vérifier que la réponse élaborée par le module d'authentification 5 correspond à la réponse attendue stockée dans la base de données pour une condition de fonctionnement (typiquement couple tension, température) du circuit correspondant à la mesure fournie par l'au moins un détecteur accompagnant la réponse élaborée par le module d'authentification.

La procédure d'authentification est ainsi la suivante. Une phase unique est effectuée pour créer la base de données contenant les différentes réponses du système aux différentes mises au défi et ce pour l'ensemble des conditions V, T du système. Une mise au défi est envoyée au système qui retourne les valeurs de tension et de température ainsi qu'un mot numérique qui est fonction de la mise au défi et qui est unique pour chaque circuit. La base de données est consultée pour les valeurs de tension et de température retournées, et vérifie que la réponse reçue correspond bien à celle stockée dans la base de données pour la mise au défi et les conditions de tension et température données. S'il y a correspondance, le circuit est authentifié. Dans le cas contraire, le circuit n'est pas authentique ou a subi des modifications.

Avec cette technique le nombre de mises au défi possibles est de $\binom{m}{m'}$, soit 2035800 mises au défi possibles par condition V, T pour m=30 et m'=7. La taille de la réponse est de $\binom{m'}{2}$ multiplié par le nombre de bits informatifs par capteur. Dans le cas d'un prototype conforme à l'invention, la taille de la réponse est de $\binom{7}{2}*4=84$ bits lorsque le module d'identification de bits a permis de réduire à 4 le nombre de bits informatifs par capteur. Mais bien entendu, la taille et le nombre de mises au défi peuvent être réduits si besoin.

Des calculs ont mis en évidence pour cette technique de mise au défi-réponse une variation inter (entre différents circuits) de 48.8% et une variation intra distance (entre différentes exécutions pour un même circuit) de 6.3%. Ces mesures, obtenues dans un environnement non contrôlé et sans tatouage de la tension et de la température, sont particulièrement satisfaisantes.

Génération de clef

La génération de clefs aléatoires ou POK (*Physically Obfuscated Key*) permet de retourner une clef stockée de façon permanente dans les caractéristiques physiques d'un circuit. Ainsi, il est plus difficile pour un attaquant de récupérer la clef par mesure des signaux externes (*probing*). De plus, une attaque invasive de ce circuit provoquera des altérations physiques et donc une destruction de la clef.

Une difficulté rencontrée lors de la génération de telles clefs est leur variabilité en fonction des conditions de fonctionnement (typiquement température et tension). L'invention se propose de contourner cette difficulté en venant tatouer la clef générée avec les informations de conditions de fonctionnement. Ainsi les modifications de la clef dues aux variations de conditions de fonctionnement peuvent être prises en compte. Ainsi, le problème de variabilité de la tension et la température est contourné en l'utilisant pour augmenter la sécurité.

L'unité de traitement 3 du système selon l'invention peut ainsi comprendre dans un mode de réalisation un module de génération de clef 6 configuré pour générer une clé au moyen des mesures fournies par les capteurs et fournir ladite clé accompagnée de la mesure fournie par l'au moins un détecteur. La clef peut notamment consister en la concaténation des mesures $F_{i,v_j,t_k}$ fournies par chacun des capteurs, éventuellement en exploitant les seuls bits identifiés comme informatifs. Ainsi, le système fournit en tant que clef les informations de condition de fonctionnement et un mot numérique qui est fonction des variations de procédé de fabrication. Pour le prototype de l'invention, on dispose de m = 30 capteurs pour lesquels on garde 4 bits informatifs, ce qui fait une clef de 120 bits (au maximum) complétée par les informations de température et de tension. Ces 120 bits peuvent servir de graine pour la génération de clefs plus longues au moyen par exemple d'un générateur de nombres pseudo-aléatoires.

Les différents modules de l'unité de traitement peuvent bien entendu être implémentés seuls ou en combinaison, et ce de manière matérielle et/ou logicielle. L'invention n'est par ailleurs pas limitée au système tel que précédemment décrit, mais s'étend également à un procédé de sécurisation d'un circuit électronique mis en œuvre par l'un et/ou l'autre des modules de l'unité de traitement, et notamment à un procédé qui comporte les étapes suivantes :

- détermination, à partir des mesures fournies par une pluralité de capteurs intégrés dans le circuit électronique, chaque capteur étant sensible aux variations de processus de fabrication et apte à fournir une mesure représentative d'une activité locale du circuit électronique, et pour chacune des fonctionnalités, une partition des capteurs entre capteurs affectés et capteurs non affectés par l'exécution de la fonctionnalité ;
- comparaison de ladite partition à une partition modèle pour détecter l'éventuelle présence d'un cheval de Troie matériel susceptible d'infecter le circuit électronique.

Et l'invention s'étend également à une mise en œuvre logicielle d'un tel procédé de sécurisation, et ainsi en particulier à un produit programme d'ordinateur comprenant des instructions de code pour l'exécution des étapes du procédé, lorsque ledit programme est exécuté sur un ordinateur.

Et on retiendra que l'invention peut s'appliquer aussi aux circuits de type ASISC qu'aux circuits de type reconfigurable (par exemple FPGA), tant dans leur conception que dans leur méthode de programmation après fabrication.

**Revendications**

1. Système (1) de sécurisation d'un circuit électronique (2) comprenant plusieurs régions (Z1-Z2, Z4-Z6, R1-R3) dont la mise en activité peut être commandée et une pluralité de capteurs (S1-Sm) intégrés dans le circuit électronique, chaque capteur étant sensible aux variations de processus de fabrication et apte à fournir une mesure représentative d'une activité locale du circuit électronique, ledit système comprenant une unité de traitement (3) qui comprend un module de vérification d'intégrité (4) et étant **caractérisé en ce que** ledit module de vérification d'intégrité (4) est configuré pour :

   - désactiver toutes les régions du circuit électronique et réaliser une acquisition des mesures fournies par les capteurs ;
   - activer à tour de rôle une seule des régions du circuit électronique, et réaliser une acquisition des mesures fournies par les capteurs ;
   - comparer, pour chacune des régions, et pour chacun des capteurs, la mesure réalisée par le capteur alors que seule la région est activée à la mesure réalisée par le capteur alors que toutes les régions sont désactivées ;

- déterminer, à partir des mesures comparées et pour chacune des régions, une partition des capteurs entre capteurs affectés et capteurs non affectés par une activation de la région ;

- comparer chacune des partitions à une partition modèle pour détecter l'éventuelle présence d'un cheval de Troie matériel susceptible d'infecter le circuit électronique.

2. Système selon la revendication 1, dans lequel au moins une des régions est dédiée à l'exécution d'une fonctionnalité, la mise en activité de l'au moins une région correspondant étant réalisée par la commande de l'exécution de ladite fonctionnalité.

3. Système selon l'une des revendications 1 à 2, comprenant en outre au moins un détecteur (Vj, Tk) intégré dans le circuit électronique et apte à fournir une mesure représentative d'une condition de fonctionnement du circuit et dans lequel l'unité de traitement comprend en outre un module d'authentification du circuit électronique par mise au défi-réponse (5) configuré pour calculer, en réponse à une mise au défi, une réponse de type fonction physique inclonable au moyen de mesures fournies par les capteurs et fournir ladite réponse accompagnée de la mesure fournie par l'au moins un détecteur.

4. Système selon la revendication 3, dans lequel le module d'authentification (5) est configuré pour calculer la réponse de type fonction physique inclonable à partir des mesures fournies par un sous-ensemble de ladite pluralité de capteurs.

5. Système selon la revendication 4, dans lequel la réponse de type fonction physique inclonable consiste en la concaténation de valeurs élaborées à partir des mesures fournies par les capteurs de chacune des paires de capteurs parmi le sous-ensemble de ladite pluralité de capteurs.

6. Système selon la revendication 5, dans laquelle la valeur élaborée pour une paire de capteurs p, q parmi le sous-ensemble de ladite pluralité de capteurs consiste en

$$\Delta F_{pq} = F_{p,v_j,t_k} + F_{q,v_j,t_k} - \frac{2}{m'} \sum_{i=1}^{m'} F_{i,v_j,t_k} \ ,$$

où m' correspond au nombre de capteurs du sous-ensemble et $F_{i,v_j,t_k}$ correspond à la mesure fournie par l'un des capteurs du sous-ensemble pour une condition de fonctionnement du circuit $v_j$, $t_k$ donnée.

7. Système selon l'une des revendications 3 à 6, comprenant en outre une base de données recensant, pour chacune d'une pluralité de conditions de fonctionnement du circuit, la réponse attendue pour une mise au défi donnée, et un comparateur configuré pour vérifier que la réponse élaborée par le module d'authentification correspond à la réponse attendue stockée dans la base de données pour une condition de fonctionnement du circuit correspondant à la mesure fournie par l'au moins un détecteur accompagnant la réponse élaborée par le module d'authentification.

8. Système selon l'une des revendications 1 à 2, comprenant en outre au moins un déctecteur (Vj, Tk) intégré dans le circuit électronique et apte à fournir une mesure représentative d'une condition de fonctionnement du circuit et dans lequel l'unité de traitement comprend outre un module de génération de clé (6) configuré pour générer une clé au moyen des mesures fournies par les capteurs et fournir ladite clé accompagnée de la mesure fournie par l'au moins un détecteur.

9. Système selon la revendication 8, dans lequel la clé consiste en la concaténation des mesures fournies par chacun des capteurs.

10. Système selon l'une des revendications 1 à 9, dans lequel les capteurs fournissent des mesures sous forme de mots numériques constitués d'une série de bits et dans lequel l'unité de traitement comprend un module d'identification des bits informatifs configuré pour éliminer des séries de bits fournies par un capteur les bits invariants dans les mots numériques fournis par les différents capteurs et les bits variants de manière aléatoire dans les différents mots numériques fournis par le capteur.

11. Système selon l'une des revendications 1 à 10, dans lequel l'unité de traitement est intégrée dans le circuit électronique.

12. Procédé de sécurisation d'un circuit électronique comprenant plusieurs régions dont la mise en activité de chacune peut être commandée et une pluralité de capteurs (S1-Sm) intégrés dans le circuit électronique, chaque capteur étant sensible aux variations de processus de fabrication et apte à fournir une mesure représentative d'une activité locale du circuit électronique, **caractérisé en ce qu'**il comporte les étapes suivantes consistant à :

- désactiver toutes les régions du circuit électronique et réaliser une acquisition des mesures fournies par les capteurs ;

- activer à tour de rôle une seule des régions du circuit électronique, et réaliser une acquisition des mesures fournies par les capteurs ;
- comparer, pour chacune des régions, et pour chacun des capteurs, la mesure réalisée par le capteur alors que seule la région est activée à la mesure réalisée par le capteur alors que toutes les régions sont désactivées ;
- déterminer, à partir des mesures comparées et pour chacune des régions, une partition des capteurs entre capteurs affectés et capteurs non affectés par une activation de la région;
- comparer chacune des partitions à une partition modèle pour détecter l'éventuelle présence d'un cheval de Troie matériel susceptible d'infecter le circuit électronique.

13. Produit programme d'ordinateur comprenant des instructions de code pour l'exécution des étapes du procédé selon la revendication 12, lorsque ledit programme est exécuté sur un ordinateur.

**Patentansprüche**

1. System (1) zum Sichern einer elektronischen Schaltung (2), umfassend mehrere Bereiche (Z1-Z2, Z4-Z6, R1-R3), deren Aktivierung angewiesen werden kann, sowie eine Mehrzahl von Sensoren (S1-Sm), welche in die elektronische Schaltung integriert sind, wobei jeder Sensor auf Variationen in einem Herstellungsprozess sensibel und dazu in der Lage ist, eine Messung zu liefern, welche eine lokale Aktivität der elektronischen Schaltung repräsentiert, **dadurch gekennzeichnet, dass** es eine Verarbeitungseinheit (3) umfasst, welche ein Integrität-Verifikationsmodul umfasst, **dadurch gekennzeichnet, dass** es dazu eingerichtet ist:

- sämtliche der Bereiche der elektronischen Schaltung zu deaktivieren und eine Aufnahme von Messungen auszuführen, welche von den Sensoren geliefert werden;
- abwechselndes Aktivieren eines einzelnen der Bereiche der elektronischen Schaltung und Durchführen einer Aufnahme von Messungen, welche von den Sensoren geliefert werden;
- Vergleichen für jeden der Bereiche und für jeden der Sensoren der Messung, welche durch den Sensor geliefert wird, wenn lediglich der Bereich aktiviert wird, mit der Messung, welche durch den Sensor durchgeführt wird, wenn sämtliche der Bereiche deaktiviert sind;
- Bestimmen ausgehend von Messungen, welche für jeden der Bereiche verglichen werden, einer Unterteilung der Sensoren zwischen Sensoren, welche von einer Aktivierung des Bereichs betroffen sind, und Sensoren, welche davon nicht betroffen sind;
- Vergleichen von jeder der Unterteilungen mit einer Modellunterteilung, um ein mögliches Vorliegen eines materiellen trojanischen Pferds zu detektieren, welches geeignet ist, die elektronische Schaltung zu infizieren.

2. System nach Anspruch 1, wobei wenigstens einer der Bereiche einem Ausführen einer Funktionalität gewidmet ist, wobei die Aktivität des wenigstens einen entsprechenden Bereichs durch das Anweisen des Ausführens der Funktionalität realisiert wird.

3. System nach einem der Ansprüche 1 bis 2, ferner umfassend wenigstens einen Detektor (Vj, Tk), welcher in die elektronische Schaltung integriert und in der Lage ist, eine Messung zu liefern, welche einen Funktionszustand der Schaltung repräsentiert, und wobei die Verarbeitungseinheit ferner ein Authentifizierungsmodul der elektronischen Schaltung durch Ausführen einer Herausforderungsantwort (5) umfasst, welches dazu eingerichtet ist, durch Berechnen als Antwort auf ein Herausfordern eine Antwort vom Typ einer unklonbaren physischen Funktion mittels Messungen zu berechnen, welche von den Sensoren geliefert werden, und die von der durch den wenigstens einen Sensor gelieferten Messung begleitete Antwort zu liefern.

4. System nach Anspruch 3, wobei das Authentifizierungsmodul (5) dazu eingerichtet ist, die Antwort vom Typ einer unklonbaren physischen Funktion ausgehend von Messungen zu berechnen, welche von einer Untermenge der Mehrzahl von Sensoren geliefert werden.

5. System nach Anspruch 4, wobei die Antwort vom Typ einer unklonbaren physischen Funktion aus der Verknüpfung von Werten besteht, welche ausgehend von den von den Sensoren von jedem der Paare von Sensoren aus der Untermenge der Mehrzahl von Sensoren gelieferten Messungen erstellt werden.

6. System nach Anspruch 5, wobei der für ein Paar von Sensoren p, q aus der Untermenge der Mehrzahl von Sensoren erstellte Wert aus $\Delta F_{pq} = F_{p,v_j,t_k} + F_{q,v_j,t_k} - \frac{2}{m'}\sum_{i=1}^{m'} F_{i,v_j,t_k}$ besteht, wobei m' der Anzahl von Sensoren der Untermenge entspricht und $F_{i,v_j,t_k}$ der Messung entspricht, welche von einem der Sensoren der Untermenge für einen Funktionszustand der gegebenen Schaltung $v_jt_k$ geliefert wird.

7. System nach einem der Ansprüche 3 bis 6, ferner umfassend eine Datenbank, welche für jeden aus einer Mehrzahl von Funktionszuständen der Schaltung, die für eine gegebene Herausforderung erwartete Antwort und ein Vergleichselement verzeichnet, welches dazu eingerichtet ist, zu verifizieren, dass die von dem Authentifizierungsmodul erstellte Antwort der in der Datenbank gespeicherten erwarteten Antwort für einen Funktionszustand der Schaltung entspricht, welcher der von dem wenigstens einen Detektor gelieferten Messung entspricht, welche die durch das Authentifizierungsmodul erstellte Antwort begleitet.

8. System nach einem der Ansprüche 1 bis 2, ferner umfassend wenigstens einen Detektor (Vj, Tk), welcher in die elektronische Schaltung integriert und dazu in der Lage ist, eine Messung zu liefern, welche einen Funktionszustand der Schaltung repräsentiert, und wobei die Verarbeitungseinheit ferner ein Modul zum Erzeugen eines Schlüssels (6) umfasst, welches dazu eingerichtet ist, einen Schlüssel mittels der von den Sensoren gelieferten Messungen zu erzeugen und den Schlüssel zu liefern, welcher von der von dem wenigstens einen Detektor gelieferten Messung begleitet wird.

9. System nach Anspruch 8, wobei der Schlüssel aus einer Verknüpfung von durch jeden der Sensoren gelieferten Messungen besteht.

10. System nach einem der Ansprüche 1 bis 9, wobei die Sensoren Messungen in Form von numerischen Wörtern, welche aus einer Serie von Bits bestehen, liefern, und wobei die Verarbeitungseinheit ein Identifikationsmodul für informatorische Bits umfasst, welches dazu eingerichtet ist, aus Serien von Bits, welche von einem Sensor geliefert werden, die invarianten Bits in den durch die unterschiedlichen Sensoren gelieferten numerischen Wörtern und die varianten Bits in zufälliger Weise in den unterschiedlichen numerischen Wörtern zu eliminieren, welche von dem Sensor geliefert werden.

11. System nach einem der Ansprüche 1 bis 10, wobei die Verarbeitungseinheit in die elektronische Schaltung integriert ist.

12. Verfahren zum Sichern einer elektronischen Schaltung, umfassend mehrere Bereiche, wobei das Aktivieren von jedem davon angewiesen werden kann, und eine Mehrzahl von Sensoren (S1, Sm), welche in die elektronische Schaltung integriert sind, wobei jeder Sensor auf Variationen in einem Herstellungsprozess sensibel und dazu in der Lage ist, eine Messung zu liefern, welche eine lokale Aktivität der elektronischen Schaltung repräsentiert, **dadurch gekennzeichnet, dass** es die folgenden Schritte umfasst, bestehend aus:

   - Deaktivieren von sämtlichen der Bereiche der elektronischen Schaltung und Ausführen einer Aufnahme von Messungen, welche von den Sensoren geliefert werden;
   - abwechselndes Aktivieren eines einzelnen der Bereiche der elektronischen Schaltung und Durchführen einer Aufnahme von Messungen, welche von den Sensoren gemessen werden;
   - Vergleichen für jeden der Bereiche und für jeden der Sensoren der Messung, welche durch den Sensor durchgeführt wird, wenn lediglich der Bereich aktiviert wird, mit der Messung, welche durch den Sensor durchgeführt wird, wenn sämtliche der Bereiche deaktiviert werden;
   - Bestimmen ausgehend von Messungen, welche für jeden der Bereiche verglichen werden, einer Unterteilung der Sensoren zwischen Sensoren, welche von einer Aktivierung des Bereichs betroffen sind, und Sensoren, welche davon nicht betroffen sind;
   - Vergleichen von jeder der Unterteilungen mit einer Modellunterteilung, um ein mögliches Vorliegen eines materiellen trojanischen Pferds zu detektieren, welches geeignet ist, die elektronische Schaltung zu infizieren.

13. Computerprogramm-Produkt, umfassend Codeanweisungen zum Ausführen der Schritte des Verfahrens nach Anspruch 12, wenn das Programm von einem Computer ausgeführt wird.

**Claims**

1. System (1) for securing an electronic circuit (2) comprising several regions (Z1-Z2, Z4-Z6, R1-R3), the activity of which may be controlled, comprising a plurality of sensors (Sl-Sm) integrated into the electronic circuit, each sensor being sensitive to the variations in the manufacturing process and able to provide a measurement representative of a local activity of the electronic circuit, the system comprising a processing unit (3) which comprises an integrity verification module (4) and being **characterized in that** the integrity verification module (4) is configured so as to:

   - deactivate all regions of the electronic circuit and make an acquisition of the measurements supplied by the sensors;
   - activate a single region of the electronic circuit one by one, and make an acquisition of the measurements supplied by the sensors;
   - for each region, and for each sensor, compare the measurement made by the sensor when only the region is activated with the measurement made by the sensor when all the regions are deactivated;
   - determine, on the basis of the measurements provided by the sensors and for each of the regions, a partition of the sensors between sensors affected and sensors not affected by an activation of the region;
- compare each of the partitions with a model partition so as to detect the possible presence of a hardware Trojan horse liable to infect the electronic circuit.

2. System according to claim 1, in which at least one of the regions is dedicated to execution of a function, the at least one corresponding region being activated by the command to execute said function.

3. System according to one of claims 1 to 2, also including at least one detector (Vj, Tk) integrated into the electronic circuit and capable of providing a measurement representative of a functional condition of the circuit and in which the processing unit also comprises an authentication module for the electronic circuit by a challenge-response (5) configured to calculate an unclonable physical function type response to a challenge, by means of measurements supplied by the sensors, and to supply said response accompanied by the measurement supplied by the at least one detector.

4. System according to claim 3, in which the authentication module (5) is configured to calculate the unclonable physical function type response from measurements made by a sub-set of said plurality of sensors.

5. System according to claim 4, in which the unclonable physical function type response consists of concatenating values generated from measurements supplied by sensors in each pair of sensors among the sub-set of said plurality of sensors.

6. System according to claim 5, in which the value generated for a pair of sensors p, q among the sub-set of said plurality of sensors consists of $\Delta F_{pq} = F_{p,v_j,t_k}$

$+ F_{q,v_j,t_k} - \frac{2}{m'}\sum_{i=1}^{m'} F_{i,v_j,t_k}$, where m' corresponds to the number of sensors in the sub-set and $F_{i,v_j,t_k}$ corresponds to the measurement supplied by one of the sensors in the sub-set for a given operating condition $v_j$, $t_k$ of the circuit.

7. System according to one of claims 3 to 6, also comprising a database listing the expected response for a given challenge for each of a plurality of operating conditions of the circuit, and a comparator configured to check that the response generated by the authentication module corresponds to the expected response stored in the database for an operating condition of the circuit corresponding to the measurement output by at least one detector accompanying the response generated by the authentication module.

8. System according to one of claims 1 to 2, also comprising at least one detector (Vj, Tk) integrated into the electronic circuit and capable of providing a measurement representative of a functional condition of the circuit and in which the processing unit also comprises a key generation module (6) configured to generate a key using measurements supplied by sensors and to supply said key together with the measurement output by the at least one detector.

9. System according to claim 8, in which the key consists of concatenating measurements provided by each of the sensors.

10. System according to one of claims 1 to 9, in which the sensors provide measurements in the form of numerical words composed of a series of bits and in which the processing unit comprises an information bits identification module configured to eliminate, from the series of bits supplied by a sensor, invariable bits in the numerical words supplied by each sensor and bits varying at random in the different numerical words supplied by the sensor.

11. System according to one of claims 1 to 10, in which the processing unit is integrated into the electronic circuit.

12. Method for securing an electronic circuit comprising several regions the activity of which can be controlled and a plurality of sensors (Sl-Sm) integrated into the electronic circuit, each sensor being sensitive to the variations in the manufacturing process and able to provide a measurement representative of a local activity of the electronic circuit, **characterised in that** it includes the following steps:

- deactivate all regions of the electronic circuit and make an acquisition of the measurements supplied by the sensors;
- activate a single region of the electronic circuit one by one, and make an acquisition of the measurements supplied by the sensors;
- for each region, and for each sensor, compare the measurement made by the sensor when only the region is activated with the measurement made by the sensor when all the regions are deactivated;
- determine, on the basis of the measurements provided by the sensors and for each of the regions, a partition of the sensors between sensors affected and sensors not affected by an activation of the region;
- compare each of the partitions with a model partition so as to detect the possible presence of a hardware Trojan horse liable to infect the electronic circuit.

13. Computer program containing code instructions for execution of the steps in the method according to claim 12 when said program is executed on a computer.

FIG. 1

FIG. 2

FIG. 3

FIG. 4

| 20 | S1 | S2 | S3 | S4 | S5 | S6 | S7 | S8 | S9 |
|----|----|----|----|----|----|----|----|----|----|
| R1 | 1 | 1 | 0 | 1 | 1 | 0 | 0 | 0 | 0 |
| R2 | 0 | 0 | 0 | 0 | 0 | 0 | 1 | 1 | 0 |
| R3 | 0 | 0 | 1 | 0 | 0 | 1 | 0 | 0 | 1 |

| 21 | S1 | S2 | S3 | S4 | S5 | S6 | S7 | S8 | S9 |
|----|----|----|----|----|----|----|----|----|----|
| R1 | 1 | 1 | 1 | 1 | 1 | 0 | 0 | 0 | 0 |
| R2 | 0 | 1 | 1 | 0 | 0 | 0 | 1 | 1 | 0 |
| R3 | 0 | 1 | 1 | 0 | 0 | 1 | 0 | 0 | 1 |
|    | 0 | 2 | 2 | 0 | 0 | 0 | 0 | 0 | 0 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013019324 A1